# EUROPEAN PATENT APPLICATION

(11) **EP 2 610 047 A1**
(43) Date of publication of application: **03.07.2013**
(21) Application number: 12382529.1
(22) Date of filing: 24.12.2012
(51) Int. Cl.: B29C 70/34, B29C 70/54

(54) **Method for manufacturing pieces of composite material having varied thicknesses**

(30) Priority: 29.12.2011 ES 201132137
(71) Applicant: Airbus Operations S.L., 28906 Madrid (ES)
(72) Inventor: Fernández Alonso, Alejandro, 28906 Getafe, Madrid (ES); García García, Aquilino, 28906 Getafe, Madrid (ES); Romón Banogon, Carlos, 28906 Getafe, Madrid (ES); Honorato Ruiz, Francisco Javier, 28906 Getafe, Madrid (ES); Galiana Blanco, Jorge Juan, 28906 Getafe, Madrid (ES); Cebolla Garrofe, Pablo, 28906 Getafe, Madrid (ES); Nogueroles Viñes, Pedro, 28906 Getafe, Madrid (ES)
(74) Representative: Elzaburu Marquez, Alberto

(57) **Abstract**

Method for manufacturing pieces of composite material having varied thicknesses. A method comprising a first stacking stage and a second forming and curing stage in which: in the second stage a forming tool (29) is used, adapted to the configuration of piece (11), except in the zone affected by the change in thickness; in the first stage one or more pre-forms (21, 23) of the piece are stacked successively with some cloths (31, 33) having the dimensions needed for producing said change of thickness, some laminates (35) of a peelable material and some supplementary cloths (41, 43) in such a way that the resulting layers have the thickness needed to be adapted to forming tool (29), and at the end of the second stage laminates (45, 47) resulting from said supplementary cloths (41, 43) and laminates (35) of a peelable material are removed.

## Description

### Field of the Invention

The present invention refers to methods for manufacturing pieces of composite material and, more specifically, to methods for manufacturing pieces made of composite material for aeronautic structures having edge zones with a minimum thickness and / or sharp changes in thickness.

### Background of the Invention

At present and especially in the aeronautical industry, materials comprising organic matrix and continuous fibers are used on a massive scale, such as, in particular, *Carbon Fiber Reinforced Plastic* or CFRP, and *Glass Fiber Reinforced Plastic* or GRFP, and in a wide range of diverse structural elements.

For example, all of the elements comprising the load transfer boxes of the aircraft lifting surfaces (ribs, stringers, spars and skins), can be manufactured using CFRP.

The skins that form part of the load transfer boxes are reinforced with longitudinal stringers along the direction of the wing span, which improves both the resistance as well as the buckling behavior of the skins, there being different transversal sections such as transversal sections having a T, I or J shape. The full height of the stringer element favors the stability of the panel on account of the greater inertia of the stiffener element.

Typically stringers are deployed in parallel to each other to form a determined angle both with the front spar and the rear spar. This configuration makes it possible to orient the stringers in the main load direction as well as increase their number in the most important structural zone.

This parallel configuration of stringers, together with the fact that the two spars are not parallel to each other, leads to a situation in which when the stringers approach a spar they are interrupted by the presence of said spar.

The end of a stringer, either because it runs up against the front spar or for any other reason, causes the redistribution of the loads supported by the stringer and the skin before it runs out on the skin panel (not stiffened) after it ends. This produces two main effects:
- Whereas the upwards or downwards flexing of stiffened skin produces situations of tension and compression, the discrete change in the structural arrangement of the skin at the run-out of the stringer creates a moment in the stringer run-out that tends to peal the connecting line between the stringer and the skin.
- At the same time the load redistribution has to take place through the connecting line so as to move the load borne by the stringer to the skin after the run-out of the stringer. Cases of high load levels (such as those experimented on a wing) leads to the resistance of the connecting line being compromised.

The co-bonded joints between skins and stringers in the covers of the lateral load transfer boxes of aircraft wings, which bear hundreds of tons in the case of high loads, are close to their maximum structural load in certain critical areas, such as the case of the run-out zones of the stringers in the wings. These co-bonded joints can break right at the stringer foot due to the high peeling loads caused by two main effects: the first is the elimination of the stringer core, which gives rise to peeling forces appearing at the run-out of the stringer with a load peak in the place where the core is completely eliminated, and second, due to the run-out of the stringer foot, which causes a cutting load peak at the place where the stringer foot ends. In a typical stringer run-out configuration, the end, both of the foot and of the core of the stringer, occurs in the same place and said load charges overlap, bearing on the structural reliability of the joint.

From a structural point of view, a progressive reduction of the thickness of the foot and core of the stringer at its edge zone would facilitate the solution of the cited problems, however this gives rise to manufacturing problems due to the fact that it involves a reduction in thickness that is incompatible with the forming tools normally used for manufacturing stringers.

A similar issue can be found in other pieces made of composite materials having sharp changes in thickness in some area.

The present invention is oriented towards the solution of these problems.

### Summary of the Invention

An object of the present invention is to provide a method for manufacturing a piece made of composite material having a change in thickness in a zone of the same and, in particular on an edge zone reaching the end of the same with a very small thickness.

Another object of the present invention is to provide a method for manufacturing a piece made of composite material having a change in thickness in a zone of the piece and, in particular, on an edge zone with the same instrument employed for making the piece without said change in thickness.

These and other objects are obtained with a method for manufacturing comprising a piece made of composite material with a change of thickness in a zone of the same that comprises a first stacking stage and a second forming and drying stage during which, in the forming and drying second stage, a forming tool is used that is adapted to the configuration of the piece except in the zone affected by the change of thickness. In a first sub-stage of the stacking stage, one or more pre-forms of the piece are stacked with some cloth having the dimensions needed for producing said change in thickness. In a second sub-stage of the stacking step, a laminate having peelable material is used on the resulting stacking of the first sub-stage. In a third sub-stage of the stacking stage some supplementary cloths are stacked on said laminate of peelable material in the zone affected by the change of thickness, in such a way that the resulting stackings have the thickness needed to be adapted to the forming tool. Following the separation of the forming tool after finishing the forming and drying stage, the laminates resulting from said supplementary cloths and the laminates peelable material are removed.

To gain the best advantage, the cloths of the pieces are cloths CFRP and the supplementary cloths are cloths of CFRP or GFRP.

A piece of composite material in which the present method would be applicable is a stiffening stringer of an aeronautic structure configured by a core and a foot having a change in thickness in a zone of the stringer and, particularly, having a reducing thickness in an edge zone of the stringer.

In one embodiment of the method of the invention for manufacturing a stringer having a T shape, during the stacking stage two flat pre-forms are stacked with the cloths of the piece, some laminates made of a peelable material and some supplementary cloths. In the forming and drying stage some pre forms having an L shape are obtained in a first sub-stage from said flat pre-forms, and in a second sub-stage the stringer having the shape of a T is obtained by removing from the stringer obtained from the joining of said pre-forms in the shape of an L, the laminates in the shape of an L obtained from said supplementary cloths, and the laminates of peelable material.

To gain the best advantage, the change in thickness of the stringer having the shape of a T is a reduction of the thickness of both the core and the foot at an edge zone.

To gain the best advantage, the reduction in the thickness of the core and the foot at the end of said edge zone comprises between 60% to 80% of the thickness of the adjacent zone.

Other features and advantages of the present invention will be disclosed in the detailed description that follows from exemplary embodiments of its object in relation to the accompanying Figures.

### Description of the Figures

Figure 1 displays a schematic view of a known method for manufacturing a stringer of a composite material having the shape of a T.
Figure 2 displays a schematic view of a method for manufacturing a stringer of a composite material having the shape of a T in accordance with the present invention..
Figure 3 displays the stacking of cloths used in the method of manufacturing a stringer of composite material with a T shape having an edge zone of reduced thickness in accordance with the present invention.
Figures 4a and 4b are, respectively, a top view and a raised view of a stringer in a T shape, manufactured with composite material using a method in accordance with the present invention.

### DETAILED DESCRIPTION OF THE INVENTION

In the aeronautical industry there are well known manufacturing processes for pieces that basically comprise a first stage of stacking and a second forming stage.

In the stacking stage layers of a composite material such as pre-peg, which is a storage susceptible fiber reinforcement and polymer matrix mixture, are placed in an appropriately shaped mould / forming tool.

This material can be presented in different forms, and in particular, in the form of cloth. For thermosetting matrices the resin is usually partially dried or otherwise brought to a controlled viscosity, called B-stage.

Composite fabrics are not placed randomly but are arranged in each zone with the number and orientation of fiber reinforcement, typically carbon fiber, determined according to the nature and magnitude of the forces that will support the piece in each zone.

In the second stage a forming and drying process is performed, which basically consists in placing the flat laminate resulting from the first stage on a forming tool or mandrel with appropriate geometry and applying heat and vacuum in accordance with a given cycle, so that said laminate is adapted to the form of the forming tool.

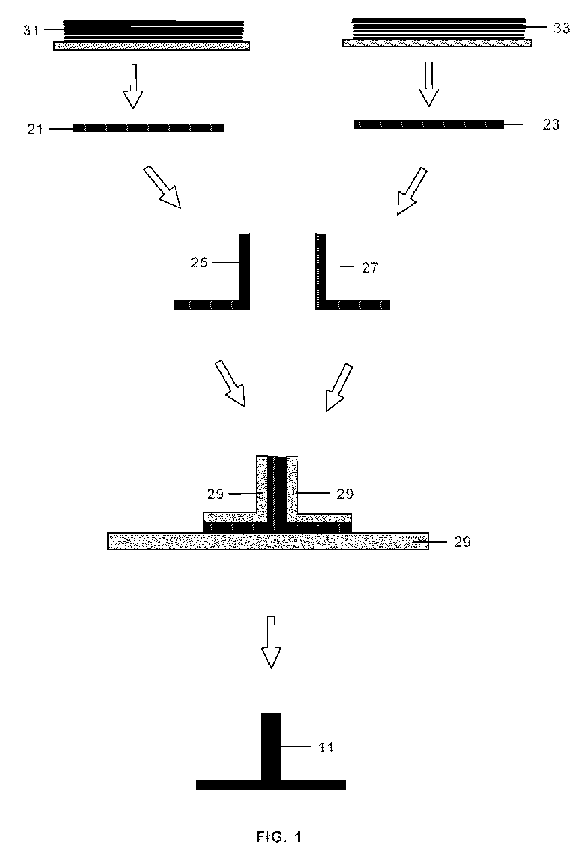

Following up on this type of process, the process of manufacturing stringers having a T shape, as shown in schematics in Figure 1, is well known.

During the stacking stage some flat pre-forms 21, 23 are obtained using some cloths 31, 33 made of CFRP.

These flat pre-forms 21, 23, are submitted to a first forming sub-stage (not shown) in which pre forms 24, 27 with an L shape are obtained and which are then submitted to a second sub-stage for forming and drying using forming tool 29. After removing forming tool 25 at the end of the forming and drying process, stringer 11 in the shape of a T is obtained.

The following is a description of the method in accordance with the invention for manufacturing stringers having the shape of a T.

The problem the invention takes on refers to the manufacturing of some of these stringers having a zone with a change in thickness that is not found in the rest of the stringers or having a change in thickness that involves a drop off of cloths that is too sharp for the available forming tool. Manufacturing the stringer with the available forming tool would give rise to stringer porosity problems resulting from a failure to adapt the forming tool to the configuration of the stringer.

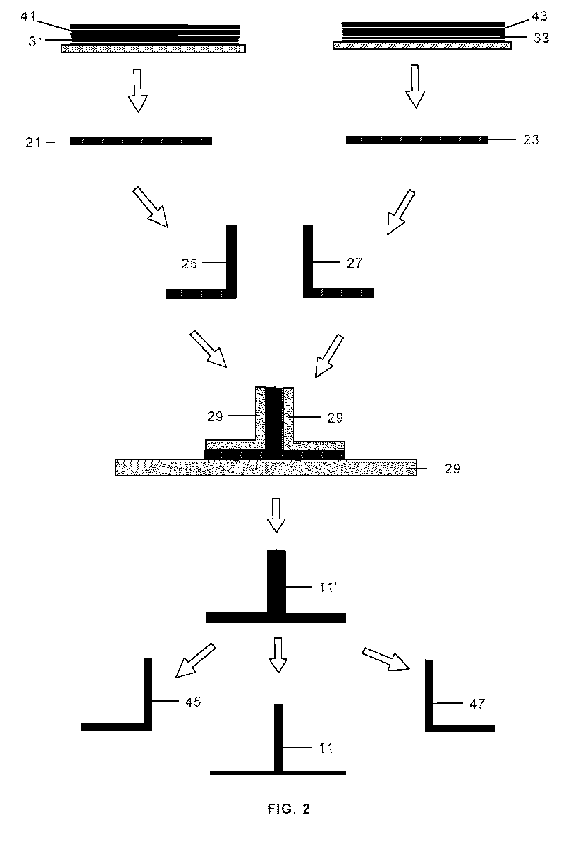

Figure 2 shows a manufacturing process of stringers in a T shape having an edge zone with little thickness in accordance with the present invention.

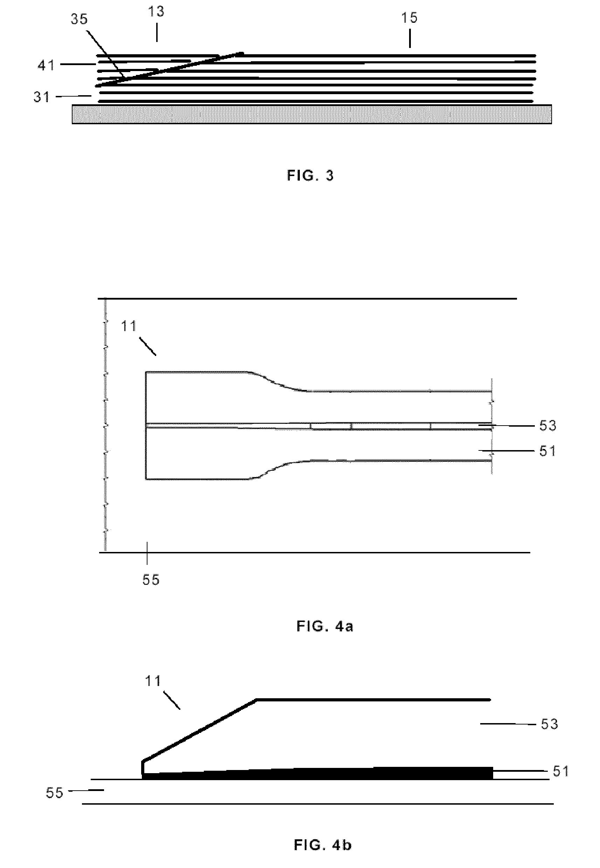

In the stacking stage two flat pre-forms 21, 23 are applied. Moving to Figure 3, it can be seen that in a first sub-stage, some cloths 31 of CFRP are stacked for flat pre-form 21 with one part of them cut before reaching the end of edge zone 13, in such a way that a progressive reduction of the thickness is produced; in a second sub-stage a laminate 35 of peelable material is place over cloths 31 and in a third sub-stage, supplementary cloths 41 are stacked, which could be cloths made from CFRP, GFRP or other materials.

In a similar manner, for flat pre-form 23 some cloths 33 of CFRP are stacked with one part of them being cut before reaching the end of edge zone 13, in such a way that a progressive reduction of the thickness is produced; a laminate 35 of peelable material is placed over cloths 33 and supplementary cloths 43, which could be cloths made from CFRP, GFRP or other materials.

The forming and drying sub-stages are similar to those in Figure 1. When forming tool 29 is removed at the end of the forming and trying stage, a stringer 11' with an edge zone having a constant thickness is obtained and, from it, the desired stringer 11, by removing laminates 45, 47 corresponding to said supplementary cloths 41, 43 and laminates 35 of peelable material.

Figures 4a and 4b display an edge zone of a stringer11 in the shape of a T manufactured in accordance with the process of the present invention, with a core 53 and a foot 51 having decreasing thickness, joined to a skin 55. The edge portions of core 53 of stringer 11 show a cut that is made after manufacturing.

An advantage of the present invention is that it is not necessary to modify forming tool 29 when it is necessary to manufacture a stringer with an edge zone having a reduced thickness or an aggressive thinning of core 53, be it at its edge or in another zone.

Another advantage of the present invention is that it avoids manufacturing defects of the edge zone of the stringer, especially porosity defects.

Although the present invention has been described in relation to several embodiments, it must be understood based on what has been stated, that it is possible to make combinations of elements, variations or improvements that are within the scope of the invention.

## Claims

1. A method for manufacturing a piece (11) of composite material having a change in thickness in a zone of the same which comprises a first stacking stage and a second shaping and drying stage, **characterized in that**:
- in the second stage of shaping and drying a forming tool (29) is used that is adapted to the shape of piece (11), except in the zone affected by the change in thickness.
- in a first sub-stage of the stacking stage, one or more pre-forms (21, 23) of the piece with some cloths (31, 33) having the dimensions needed for producing said change in thickness, are stacked.
- in a second sub-stage of the stacking stage, a laminate (35) of peelable material is used having on top the stacking(s) from the first sub-stage.
- in a third sub-stage of the stacking stage, some supplementary cloths (41,43) are stacked on top of said composite material laminates (35) in the zone affected by the change in thickness, in such a way that the stackings obtained have the necessary thickness for being adapted to forming tool (29).
- after removing forming tool (29) at the end of the forming and drying stage, the obtained laminates (45, 47) are removed from said supplementary cloths (41, 43) and laminates (35) of peelable material.

2. A method in accordance with claim 1 in which said cloths (31, 33) are cloths made of CFRP and said supplementary cloths (41, 43) are cloths made of CFRP or GFRP.

3. A method in accordance with either of claims 1 or 2 in which said piece (11) is a stiffening stringer of an aeronautical structure comprising a core and a foot.

4. A method in accordance with claim 3 in which said stringer (11) has the shape of a T.

5. A method in accordance with claim 4 in which during the stacking stage two flat pre-forms (21, 23) are stacked with cloths (31, 33), some laminates (25) made of a peelable material and some supplementary cloths (41, 43), and in the forming and drying stage some pre forms having the shape of an L (25, 27) are obtained in a first sub-stage from said flat pre-forms (21,23), and in a second sub-stage stringer (11) having the shape of a T is obtained by removing from stringer (11'), obtained from the joining of said pre-forms (25, 27) in the shape of an L, and laminates (45, 47) in the shape of an L obtained from said supplementary cloths (41, 43) and laminates (35) of peelable material.

6. A method in accordance with claim 5 in which said change in thickness occurs on an edge zone (13) of stringer (11).

7. A method in accordance with claim 6 in which said change in thickness is a decrease of the thickness of both core (53) and foot (51) in said edge zone (13).

8. A method in accordance with claim 7 in which the decrease in the thickness of core (53) and foot (51) at the end of said edge zone (13) comprises between 60% to 80% of the thickness of adjacent zone (15).
